# EUROPÄISCHE PATENTSCHRIFT

(11) **EP 4 308 267 B1**
(45) Veröffentlichungstag und Bekanntmachung des Hinweises auf die Patenterteilung: **28.05.2025**
(21) Anmeldenummer: 22711520.1
(22) Anmeldetag: 07.03.2022
(51) Int. Cl.: B01D 29/21, B01D 29/60, B01D 36/00

(54) **FILTEREINSATZ ZUM EINSETZEN IN EIN FILTERGEHÄUSE**
FILTER INSERT FOR INSERTION INTO A FILTER HOUSING
INSERT FILTRANT DESTINÉ À ÊTRE INSÉRÉ DANS UN BOÎTIER DE FILTRE

(30) Priorität: 16.03.2021 DE 102021106343
(43) Veröffentlichungstag der Anmeldung: 24.01.2024
(73) Patentinhaber: Hengst SE, 48147 Münster (DE)
(72) Erfinder: BACHMANN, Jens, 48147 Münster (DE); LEE, Marvin Michael, 49179 Ostercappeln (DE); NIEHOFF, Julian, 48653 Coesfeld (DE); VON LÜTZAU, Mark, 48157 Münster (DE)
(74) Vertreter: Pelster Behrends Patentanwälte PartG mbB
(86) Internationale Anmeldenummer: PCT/EP2022/055769
(87) Internationale Veröffentlichungsnummer: WO 2022/194600

(56) Entgegenhaltungen:
- WO-A1-01/94773
- DE-A1- 102018 133 331
- DE-A1- 3 217 162
- US-A1- 2012 303 204

## Beschreibung

Die Erfindung betrifft einen Filtereinsatz zum Einsetzen in ein Filtergehäuse eines Fluidfilters, mit einem Filtermaterial, welches dazu eingerichtet ist, im Betrieb des Fluidfilters von einer Rohseite zu einer Reinseite des Fluidfilters von einem zu filternden Fluid durchströmt zu werden.

Ferner betrifft die Erfindung einen Fluidfilter zum Filtern eines Fluids, wobei der Fluidfilter ein Filtergehäuse mit einem gehäuseseitigen Funkmodul und einen Filtereinsatz mit einem schwimmfähigen Funkmodul aufweist, wobei der Filtereinsatz dazu eingerichtet ist, in das Filtergehäuse eingesetzt zu werden. Das schwimmfähige Funkmodul und das gehäuseseitige Funkmodul sind dazu eingerichtet, miteinander zu kommunizieren.

Darüber hinaus betrifft die Erfindung ein Filtersystem mit einem Fluidfilter und einer elektronischen Datenverarbeitungseinrichtung.

Bei einigen Fluidfiltern ist es vorteilhaft oder sogar erforderlich, dass während der Filtration Wasser aus dem zu filternden Fluid abgeschieden wird. Eine Wasserabscheidung im Rahmen der Fluidfiltration findet man beispielsweise bei Kraftstofffiltern oder Luftfiltern einer Brennstoffzelle.

Um den ordnungsgemäßen Betrieb des Fluidfilters gewährleisten zu können, muss die aus dem Fluid abgeschiedene und sich in einem Sammelwasserbereich des Fluidfilters ansammelnde Wassermenge aus dem Filtergehäuse des Fluidfilters abgelassen oder auf eine andere Art entfernt werden. Zur Überwachung des Wasserstandes können die Filtergehäuse entsprechender Fluidfilter mit einem Sichtfenster ausgestattet sein, über welches der Füllstand im Wassersammelbereich optisch durch eine Person geprüft werden kann. Ferner sind Fluidfilter bekannt, welche mit einem Wasserstandsensor ausgestattet sind, sodass über die Sensordaten des Wasserstandsensors eine Überwachung des Füllstands im Wassersammelbereich umgesetzt werden kann.

Weiterer Stand der Technik ist beispielsweise aus den Druckschriften DE 10 2018 133331 A1, US 2012/303204 A1, WO 01/94773 A1 und DE 32 17 162 A1 bekannt.

In einer Vielzahl von Anwendungsfällen, in welchen Fluidfilter mit einer Wasserabscheidung eingesetzt werden, besteht der Bedarf an intelligenten Fluidfiltern, welche dazu in der Lage sind, über den Wasserstand in dem Wassersammelbereich hinausgehende Informationen, welche beispielsweise eine Identifikation des eingesetzten Filtereinsatzes erlauben oder Betriebsparameter des Fluidfilters oder des Filtereinsatzes betreffen, bereitzustellen. Dies ist mit den zur Erfassung des Wasserstandes eingesetzten Sensoren bisher nicht möglich.

Bei anderen Fluidfiltern, beispielsweise bei einem Fluidfilter eines Dampfdruckreinigers, sammelt sich ebenfalls Wasser in einem Wassersammelbereich an.

Die der Erfindung zugrundeliegende Aufgabe besteht somit darin, eine intelligente Wasserstandserfassung in einem Fluidfilter zu ermöglichen, bei welcher über den Wasserstand in dem Wassersammelbereich des Fluidfilters hinausgehende Informationen für den Betrieb des Fluidfilters oder den Betrieb der Maschine, in welcher der Fluidfilter eingesetzt wird, bereitgestellt werden.

Die Aufgabe wird gelöst durch einen Filtereinsatz der eingangs genannten Art, wobei der erfindungsgemäße Filtereinsatz ein schwimmfähiges Funkmodul aufweist, welches dazu eingerichtet ist, im Betrieb des Fluidfilters auf einer sich in einem Wassersammelbereich des Fluidfilters befindenden Wassermenge zu schwimmen.

Dadurch, dass das schwimmfähige Funkmodul auf der Wassermenge im Wassersammelbereich schwimmen kann, verändert sich die Position des schwimmfähigen Funkmoduls gleichzeitig mit dem Wasserstand in dem Wassersammelbereich. Das schwimmfähige Funkmodul ist vorzugsweise dazu eingerichtet, sich im Betrieb des Fluidfilters in Abhängigkeit des Wasserstandes in dem Wassersammelbereich des Fluidfilters in Axialrichtung zu bewegen. Das schwimmfähige Funkmodul erlaubt also eine funkbasierte Erfassung des Wasserstandes in dem Wassersammelbereich des Fluidfilters. Das schwimmfähige Funkmodul erlaubt außerdem eine funkbasierte Identifikation des Filtereinsatzes, da es die Bereitstellung von Informationen ermöglicht, welche über eine Wasserstandsangabe hinausgehen. Somit können mittels des schwimmfähigen Funkmoduls beispielsweise filtereinsatzspezifische, fluidfilterspezifische und/oder fluidspezifische Informationen bereitgestellt werden, welche für den Betrieb des Fluidfilters oder den Betrieb der Maschine, in welcher der Fluidfilter eingesetzt wird, verwendet werden können.

Das Filtermaterial ist vorzugsweise dazu eingerichtet ist, im Betrieb des Fluidfilters Wasser aus dem Fluid abzuscheiden. Das schwimmfähige Funkmodul ist vorzugsweise dazu eingerichtet, im Betrieb des Fluidfilters auf einer aus dem Fluid abgeschiedenen Wassermenge zu schwimmen.

Der Fluidfilter kann beispielsweise ein Kraftstofffilter sein, sodass das Fluid Kraftstoff ist. Der Fluidfilter kann auch ein Luftfilter einer Brennstoffzelle sein. Alternativ kann der Fluidfilter Bestandteil eines Dampfdruckreinigers sein.

Das Filtermaterial kann einen umlaufenden Filtermaterialkörper bilden. Das Filtermaterial kann mehrfach gefaltet und/oder als Faltenbalg ausgebildet sein.

In einer bevorzugten Ausführungsform des erfindungsgemäßen Filtereinsatzes weist das schwimmfähige Funkmodul eine geringere Dichte als Wasser und/oder eine Dichte von weniger als 997 kg/m³ auf. Aufgrund einer derartigen Dichte schwimmt das schwimmfähige Funkmodul auf der Oberfläche des Wassers. Somit kann erreicht werden, dass das schwimmfähige Funkmodul seine Axialposition in Abhängigkeit des aktuellen Wasserstandes in dem Wassersammelbereich ändert.

In einer weiteren bevorzugten Ausführungsform des erfindungsgemäßen Filtereinsatzes ist das schwimmfähige Funkmodul dazu eingerichtet, im Betrieb des Fluidfilters in einer Grenzschicht zwischen dem zu filternden Fluid auf der Rohseite des Fluidfilters und der sich in dem Wassersammelbereich des Fluidfilters befindenden Wassermenge zu schwimmen. In diesem Fall weist das schwimmfähige Funkmodul eine höhere Dichte als das zu filternde Fluid auf.

Darüber hinaus ist ein erfindungsgemäßer Filtereinsatz bevorzugt, bei welchem das schwimmfähige Funkmodul eine höhere Dichte als Benzin und/oder Diesel und/oder eine Dichte von mehr als 748 kg/m³ oder mehr als 833 kg/m³ aufweist. Benzin weist eine Dichte von 748 kg/m³ auf. Diesel weist eine Dichte von 833 kg/m³ auf. Der Filtereinsatz ist in diesem Fall dazu eingerichtet, in einem Kraftstofffilter, insbesondere in einem Dieselfilter oder einem Benzinfilter, eingesetzt zu werden. Das schwimmfähige Funkmodul ist vorzugsweise dazu eingerichtet, in einer Grenzschicht zwischen dem zu filternden Kraftstoff auf der Rohseite des Fluidfilters und der sich in dem Wassersammelbereich des Fluidfilters befindenden Wassermenge zu schwimmen.

Es ist ferner ein erfindungsgemäßer Filtereinsatz bevorzugt, bei welchem das schwimmfähige Funkmodul dazu eingerichtet ist, zur Erfassung des Wasserstandes in dem Wassersammelbereich des Fluidfilters mit einem gehäuseseitigen Funkmodul des Fluidfilters zu kommunizieren, dessen Abstand zum schwimmfähigen Funkmodul sich bei einer Veränderung des Wasserstandes in dem Wassersammelbereich des Fluidfilters ändert. Das gehäuseseitige Funkmodul ist vorzugsweise unbeweglich an dem Filtergehäuse angeordnet oder unbeweglich in das Filtergehäuse integriert. Die Bewegung des schwimmfähigen Funkmoduls wird durch eine Wasserstandsänderung veranlasst, sodass die Erfassung des Wasserstands über den veränderlichen Abstand zwischen dem gehäuseseitigen Funkmodul und dem schwimmfähigen Funkmodul erfolgt. Insofern erlaubt das schwimmfähige Funkmodul eine funkbasierte Erfassung des Wasserstandes in dem Wassersammelbereich.

Der Filtereinsatz kann auch mehrere schwimmfähige Funkmodule oder ein schwimmfähiges Funkmodul mit mehreren Funkeinheiten aufweisen, welche dazu eingerichtet sind, im Betrieb des Fluidfilters zur Erfassung des Wasserstandes in dem Wassersammelbereich des Fluidfilters auf der sich in dem Wassersammelbereich des Fluidfilters befindenden Wassermenge zu schwimmen und mit einem gehäuseseitigen Funkmodul des Fluidfilters zu kommunizieren. Die mehreren schwimmfähigen Funkmodule oder die mehreren Funkeinheiten des einen schwimmfähigen Funkmoduls können Funkmodule bzw. Funkeinheiten des gleichen Typs oder Funkmodule bzw. Funkeinheiten unterschiedlicher Typen sein. Die mehreren schwimmfähigen Funkmodule oder die mehreren Funkeinheiten des einen schwimmfähigen Funkmoduls können beispielsweise unterschiedliche Modulationsarten verwenden, sodass deren Funksignale unterscheidbar sind. Ferner können die Funksignale anhand einer gesendeten Kennung einem schwimmfähigen Funkmodul bzw. einer Funkeinheit des einen schwimmfähigen Funkmoduls zugeordnet werden. Die mehreren schwimmfähigen Funkmodule oder die mehreren Funkeinheiten des einen schwimmfähigen Funkmoduls können die gleiche Übertragungsfrequenz oder voneinander abweichende Übertragungsfrequenzen nutzen. Die Anzahl der mit dem gehäuseseitigen Funkmodul kommunizierenden schwimmfähigen Funkmodule bzw. die Anzahl der mit dem gehäuseseitigen Funkmodul kommunizierenden Funkeinheiten des einen schwimmfähigen Funkmoduls ist vorzugsweise von deren Axialposition und somit von deren Abstand zum gehäuseseitigen Funkmodul abhängig. Somit kann über die Anzahl der mit dem gehäuseseitigen Funkmodul kommunizierenden schwimmfähigen Funkmodule bzw. die Anzahl der mit dem gehäuseseitigen Funkmodul kommunizierenden Funkeinheiten des einen schwimmfähigen Funkmoduls der Abstand zwischen dem gehäuseseitigen Funkmodul und den schwimmfähigen Funkmodulen bzw. der Abstand zwischen dem gehäuseseitigen Funkmodul und den Funkeinheiten des einen schwimmfähigen Funkmoduls ermittelt werden, woraus der Wasserstand im Wassersammelbereich abgeleitet werden kann. Die mehreren schwimmfähigen Funkmodule oder die mehreren Funkeinheiten des einen schwimmfähigen Funkmoduls können übereinander angeordnet sein. Bei einem geringen Abstand zum gehäuseseitigen Funkmodul kommuniziert eine größere Anzahl von schwimmfähigen Funkmodulen bzw. eine größere Anzahl von Funkeinheiten des einen schwimmfähigen Funkmoduls mit dem gehäuseseitigen Funkmodul als bei einem größeren Abstand zum gehäuseseitigen Funkmodul.

Die Kommunikation zwischen dem schwimmfähigen Funkmodul und dem gehäuseseitigen Funkmodul kann kontinuierlich oder diskontinuierlich erfolgen. Die Kommunikation zwischen dem schwimmfähigen Funkmodul und dem gehäuseseitigen Funkmodul kann in regelmäßigen oder in unregelmäßigen Zeitabständen erfolgen und/oder durch spezifische Ereignisse ausgelöst bzw. veranlasst werden. Somit erfolgt die Erfassung des Wasserstandes in dem Wassersammelbereich in regelmäßigen oder in unregelmäßigen Zeitabständen und/oder ereignisabhängig.

In einer Weiterbildung des erfindungsgemäßen Filtereinsatzes ist das schwimmfähige Funkmodul dazu eingerichtet, ein oder mehrere Funksignale auszusenden, mittels welchen der Abstand des schwimmfähigen Funkmoduls zu dem gehäuseseitigen Funkmodul ermittelbar ist und/oder welcher eine Identifikation des Filtereinsatzes oder eine Typerkennung des Filtereinsatzes erlauben. Beispielsweise ist das schwimmfähige Funkmodul dazu eingerichtet, eine einmalig vergebene und/oder filtereinsatzspezifische Kennung auszusenden, sodass über eine Signalauswertung der sich in dem Filtergehäuse befindende Filtereinsatz identifiziert werden kann. Über das eine oder die mehreren Funksignale können auch filtereinsatzbezogene Betriebsinformationen, wie beispielsweise die Laufleistung oder die bisherige Betriebsdauer, an das gehäuseseitige Funkmodul übermittelt werden. Ferner können fluidbezogene Betriebsinformationen von dem schwimmfähigen Funkmodul an das gehäuseseitige Funkmodul übermittelt werden, beispielsweise die aktuelle Temperatur des Wassers oder des zu filternden Fluids oder eine darauf bezogene zurückliegende Temperaturentwicklung. Die filtereinsatzbezogenen und/oder fluidbezogenen Betriebsinformationen können von dem schwimmfähigen Funkmodul während des Betriebs ermittelt und aufgezeichnet werden. Das schwimmfähige Funkmodul kann folglich einen Speicher zum Speichern der filtereinsatzbezogenen und/oder fluidbezogenen Betriebsinformationen umfassen, welcher während des Betriebs mit den filtereinsatzbezogenen und/oder fluidbezogenen Betriebsinformationen beschrieben wird.

In einer weiteren bevorzugten Ausführungsform weist der erfindungsgemäße Filtereinsatz eine Schwimmkammer auf, in welcher das schwimmfähige Funkmodul angeordnet ist, wobei die Schwimmkammer dazu eingerichtet ist, im Betrieb des Fluidfilters in den Wassersammelbereich des Fluidfilters hineinzuragen. Die Schwimmkammer kann beispielsweise ein Schwimmkäfig sein. Das schwimmfähige Funkmodul kann ein Modulgehäuse oder einen Modulkörper umfassen, welcher in der Schwimmkammer angeordnet ist. Das Modulgehäuse oder der Modulkörper können beispielsweise aus Kunststoff ausgebildet sein. Das schwimmfähige Funkmodul kann beispielsweise durch ein schwimmfähiges Kunststoffelement mit einem integrierten RFID-Tag gebildet werden.

Es ist ferner ein erfindungsgemäßer Filtereinsatz vorteilhaft, bei welchem die Schwimmkammer einen Auftriebsbereich für das schwimmfähige Funkmodul aufweist, welches ein Aufsteigen des schwimmfähigen Funkmoduls bei steigendem Wasserstand in dem Wassersammelbereich des Fluidfilters erlaubt. Innerhalb des Auftriebsbereichs kann das schwimmfähige Funkmodul bei steigendem Wasserstand eine Axialbewegung ausführen.

In einer anderen Ausführungsform des erfindungsgemäßen Filtereinsatzes ist das schwimmfähige Funkmodul oder ein weiteres filtereinsatzseitiges Funkmodul dazu eingerichtet, sich im Betrieb des Fluidfilters in Abhängigkeit des Druckunterschieds zwischen Rohseite und Reinseite des Fluidfilters zu bewegen und zur Erfassung des Verschmutzungszustands des Filtereinsatzes mit einem gehäuseseitigen Funkmodul des Fluidfilters, dessen Abstand zum schwimmfähigen Funkmodul oder zum weiteren filtereinsatzseitigen Funkmodul sich beim Bewegen des schwimmfähigen Funkmoduls oder des weiteren filtereinsatzseitigen Funkmoduls ändert, zu kommunizieren. Das schwimmfähige Funkmodul oder das weitere filtereinsatzseitige Funkmodul kann auch eine funkbasierte Identifikation des Filtereinsatzes erlauben. Das schwimmfähige Funkmodul oder das weitere filtereinsatzseitige Funkmodul erlaubt ferner die funkbasierte Erfassung des Verschmutzungszustands des Filtermaterials. Das schwimmfähige Funkmodul oder das weitere filtereinsatzseitige Funkmodul ist vorzugsweise dazu eingerichtet, sich im Betrieb des Fluidfilters in Abhängigkeit des Druckunterschieds zwischen Rohseite und Reinseite des Fluidfilters in Axialrichtung zu bewegen.

Der Filtereinsatz kann auch mehrere weitere filtereinsatzseitige Funkmodule aufweisen, welche dazu eingerichtet sind, sich im Betrieb des Fluidfilters zur Erfassung des Verschmutzungszustands des Filtermaterials in Abhängigkeit des Druckunterschieds zwischen der Rohseite und der Reinseite des Fluidfilters zu bewegen und mit einem gehäuseseitigen Funkmodul des Fluidfilters zu kommunizieren. Die mehreren filtereinsatzseitigen Funkmodule können Funkmodule des gleichen Typs oder Funkmodule unterschiedlicher Typen sein. Die weiteren filtereinsatzseitigen Funkmodule können beispielsweise unterschiedliche Modulationsarten verwenden, sodass deren Funksignale unterscheidbar sind. Ferner können die Funksignale anhand einer gesendeten Kennung einem der weiteren filtereinsatzseitigen Funkmodule zugeordnet werden. Die mehreren weiteren filtereinsatzseitigen Funkmodule können die gleiche Übertragungsfrequenz oder voneinander abweichende Übertragungsfrequenzen nutzen. Die Anzahl der mit dem gehäuseseitigen Funkmodul kommunizierenden weiteren filtereinsatzseitigen Funkmodule ist vorzugsweise von deren Axialposition und somit von deren Abstand zum gehäuseseitigen Funkmodul abhängig. Somit kann über die Anzahl der mit dem gehäuseseitigen Funkmodul kommunizierenden weiteren filtereinsatzseitigen Funkmodule der Abstand zwischen dem gehäuseseitigen Funkmodul und den filtereinsatzseitigen Funkmodulen ermittelt werden, woraus der Verschmutzungszustand des Filtermaterials abgeleitet werden kann. Die weiteren filtereinsatzseitigen Funkmodule können übereinander angeordnet sein. Bei einem geringen Abstand zum gehäuseseitigen Funkmodul kommuniziert eine größere Anzahl von weiteren filtereinsatzseitigen Funkmodulen mit dem gehäuseseitigen Funkmodul als bei einem größeren Abstand zum gehäuseseitigen Funkmodul.

In einer anderen bevorzugten Ausführungsform des erfindungsgemäßen Filtereinsatzes ist das weitere filtereinsatzseitige Funkmodul dazu eingerichtet, ein oder mehrere Funksignale auszusenden, mittels welchen der Abstand des weiteren filtereinsatzseitigen Funkmoduls zu dem gehäuseseitigen Funkmodul ermittelbar ist und/oder welche eine Identifikation des Filtereinsatzes oder eine Typerkennung des Filtereinsatzes erlauben. Beispielsweise sendet das weitere filtereinsatzseitige Funkmodul eine einmalig vergebene oder filtereinsatzspezifische Kennung aus. Der Filtereinsatz kann ein Umgehungsventil oder zumindest einen Teil eines Umgehungsventils aufweisen, wobei das weitere filtereinsatzseitige Funkmodul an dem Umgehungsventil oder dem filtereinsatzseitigen Teil des Umgehungsventils angeordnet oder in das Umgehungsventil oder das filtereinsatzseitige Teil des Umgehungsventils integriert ist. Das Umgehungsventil ist im Betrieb des Fluidfilters zwischen der Rohseite und der Reinseite des Fluidfilters angeordnet. Vorzugsweise weist das Umgehungsventil einen beweglichen Verschlusskörper auf oder das filtereinsatzseitige Teil des Umgehungsventils ist ein beweglicher Verschlusskörper, welcher dazu eingerichtet ist, sich in Abhängigkeit des Druckunterschieds zwischen Rohseite und Reinseite des Fluidfilters relativ zu einem einen Ventilsitz tragenden Kontaktkörper des Umgehungsventils zu bewegen, wobei das weitere filtereinsatzseitige Funkmodul an dem Verschlusskörper des Umgehungsventils angeordnet und/oder dazu eingerichtet ist, sich gemeinsam mit dem Verschlusskörper des Umgehungsventils zu bewegen. Der Verschlusskörper sorgt vorzugsweise für eine radiale Abdichtung. Der Verschlusskörper ist das Teil des Umgehungsventils, welches die zu einer Öffnung des Umgehungsventils führende Bewegung ausführt. Der den Ventilsitz tragende Kontaktkörper ist das Teil des Umgehungsventils, welches während der Öffnung des Umgehungsventils still steht bzw. keine Bewegung ausführt. Der Verschlusskörper ist vorzugsweise ein Absperrkolben. Der Verschlusskörper des Umgehungsventils ist vorzugsweise dazu eingerichtet, sich im Betrieb des Fluidfilters in Abhängigkeit des Druckunterschieds zwischen Rohseite und Reinseite des Fluidfilters in Axialrichtung zu bewegen. Der Verschlusskörper ist vorzugsweise dazu eingerichtet, eine Bypass-Leitung zwischen der Rohseite und der Reinseite zu sperren, bis der Druckunterschied zwischen Rohseite und Reinseite einen Differenzdruckgrenzwert erreicht. Bei Erreichen des Differenzdruckgrenzwertes gibt der Verschlusskörper dann die Bypass-Leitung frei, sodass zumindest ein Teil des zu filternden Fluids von der Rohseite auf die Reinseite gelangen kann, ohne das Filtermaterial zu durchströmen. Die Bypassleitung kann durch eine oder mehrere Durchtrittsöffnungen in einer um den Verschlusskörper umlaufenden Bewandung gebildet werden, welche durch eine Axialbewegung des Verschlusskörpers freigegeben werden. Unterhalb des Differenzdruckgrenzwertes bzw. vor Erreichen des Differenzdruckgrenzwertes bewegt sich der Verschlusskörper mit zunehmendem Differenzdruck, ohne dass es zur Freigabe der Bypass-Leitung kommt. Der Verschlusskörper kann in einer Führungshülse angeordnet sein, welche dazu eingerichtet ist, den Verschlusskörper während einer differenzdruckbedingten Bewegung zu führen, wobei die Führungshülse von dem Filtermaterial umgeben wird. Vorzugsweise weist das Umgehungsventil einen beweglichen Kontaktkörper auf oder das filtereinsatzseitige Teil des Umgehungsventils ist ein beweglicher Kontaktkörper, welcher einen Ventilsitz für einen Verschlusskörper des Umgehungsventils trägt, wobei der Kontaktkörper dazu eingerichtet ist, sich in Abhängigkeit des Druckunterschieds zwischen Rohseite und Reinseite des Fluidfilters relativ zu dem Verschlusskörper zu bewegen, wobei das weitere filtereinsatzseitige Funkmodul an dem Kontaktkörper des Umgehungsventils angeordnet und dazu eingerichtet ist, sich gemeinsam mit dem Kontaktkörper des Umgehungsventils zu bewegen.

Das filtereinsatzseitige Funkmodul kann ferner an einem Elastomerbalg des Filtereinsatzes befestigt sein, wobei der Elastomerbalg bei steigendem Differenzdruck zwischen der Rohseite und der Reinseite des Fluidfilters verformt wird und eine Axialbewegung des filtereinsatzseitigen Funkmoduls erlaubt.

Das Filtermaterial wird vorzugsweise von einer Trägerstruktur getragen, welche dazu eingerichtet ist, sich gemeinsam mit dem Filtermaterial im Betrieb des Fluidfilters in Abhängigkeit des Druckunterschieds zwischen Rohseite und Reinseite des Fluidfilters zu bewegen, wobei das weitere filtereinsatzseitige Funkmodul an der Trägerstruktur oder dem Filtermaterial angeordnet oder dazu eingerichtet ist, sich gemeinsam mit der Trägerstruktur und/oder dem Filtermaterial zu bewegen. Die Trägerstruktur kann einteilig oder mehrteilig sein. Die Trägerstruktur ist vorzugsweise dazu eingerichtet, sich im Betrieb des Fluidfilters gemeinsam mit dem Filtermaterial in Abhängigkeit des Druckunterschieds zwischen Rohseite und Reinseite des Fluidfilters in Axialrichtung zu bewegen. Das filtereinsatzseitige Funkmodul kann mittig an der Trägerstruktur angeordnet sein. Das schwimmfähige Funkmodul und das filtereinsatzseitige Funkmodul können mit demselben gehäuseseitigen Funkmodul oder mit unterschiedlichen gehäuseseitigen Funkmodulen kommunizieren. Vorzugsweise unterschiedet sich der Typ des schwimmfähigen Funkmoduls von dem Typ des weiteren filtereinsatzseitigen Funkmoduls, sodass ein mit diesen Funkmodulen kommunizierendes gehäuseseitiges Funkmodul die empfangenen Signale zuordnen kann. Vorzugsweise sind das schwimmfähige Funkmodul und das weitere filtereinsatzseitige Funkmodul dazu eingerichtet, abweichende Modulationsarten und/oder Übertragungsfrequenzen zu nutzen.

In einer Weiterbildung des erfindungsgemäßen Filtereinsatzes sind das schwimmfähige Funkmodul und/oder das weitere filtereinsatzseitige Funkmodul jeweils dazu eingerichtet, die für die Kommunikation mit dem gehäuseseitigen Funkmodul benötigte Energie aus einem von dem gehäuseseitigen Funkmodul erzeugten elektromagnetischen Feld zu beziehen. Das schwimmfähige Funkmodul und/oder das weitere filtereinsatzseitige Funkmodul benötigen somit keine eigene Stromversorgung. Insofern kann auf eine Verkabelung des schwimmfähigen Funkmoduls und/oder des weiteren filtereinsatzseitigen Funkmoduls verzichtet werden. Dies sorgt für einen geringeren Verschleiß und eine erhöhte Ausfallsicherheit. Ferner entfallen Restriktionen bei der Anordnung des schwimmfähigen Funkmoduls und/oder des weiteren filtereinsatzseitigen Funkmoduls.

In einer Weiterbildung des erfindungsgemäßen Filtereinsatzes umfasst das schwimmfähige Funkmodul und/oder das weitere filtereinsatzseitige Funkmodul jeweils einen Transponder, insbesondere einen RFID-Transponder. Alternativ kann das schwimmfähige Funkmodul und/oder das weitere filtereinsatzseitige Funkmodul jeweils als Transponder, insbesondere als RFID-Transponder, ausgebildet sein. Das gehäuseseitige Funkmodul umfasst vorzugsweise ein RFID-Lesegerät oder ist als RFID-Lesegerät ausgebildet.

Ferner kann das schwimmfähige Funkmodul und/oder das weitere filtereinsatzseitige Funkmodul dazu eingerichtet sein, die elektrische Leitfähigkeit des Fluids im Nahbereich des schwimmfähigen Funkmoduls und/oder des filtereinsatzseitigen Funkmoduls zu erfassen bzw. zu messen. Die elektrische Leitfähigkeit von Fluiden nimmt im Laufe der Zeit bedingt durch Ruß- und Wassereintrag oder Metallabrieb zu, sodass über die Messung der elektrischen Leitfähigkeit die Fluidqualität bestimmt werden kann. Zur Messung der elektrischen Leitfähigkeit könnte das das schwimmfähige Funkmodul und/oder das weitere filtereinsatzseitige Funkmodul eine offene bzw. unterbrochene elektrische Leitung aufweisen, deren Zustand mittels einer elektronischen Überwachungseinrichtung überwacht wird. Über eine Stromfluss- und/oder Widerstandsmessung an der offenen Leitung dann die elektrische Leitfähigkeit des Fluids und somit die aktuelle Fluidqualität festgestellt werden.

In einer weiteren bevorzugten Ausführungsform des erfindungsgemäßen Filtereinsatzes weist das schwimmfähige Funkmodul und/oder das weitere filtereinsatzseitige Funkmodul eine Temperaturmesseinrichtung auf und ist dazu eingerichtet, Temperaturmesswerte an das gehäuseseitige Funkmodul zu übermitteln. Der Filtereinsatz kann beispielsweise ein Kraftstofffiltereinsatz sein. Das gehäuseseitige Funkmodul empfängt beispielsweise ein Temperatursignal vom schwimmfähige Funkmodul und/oder vom weiteren filtereinsatzseitigen Funkmodul. Das schwimmfähige Funkmodul und/oder das weitere filtereinsatzseitige Funkmodul kann einen zusätzlichen Mikrocontroller und einen oder mehrere Temperatursensoren umfassen, welche die Temperaturmesseinrichtung bilden. Die übermittelten Temperaturmesswerte können zum Steuern oder Regeln einer Heizeinrichtung, insbesondere einer Kraftstoffheizeinrichtung, verwendet werden. Wenn die Kraftstofftemperatur zu niedrig ist, wird die Kraftstoffheizeinrichtung eingeschaltet. Das gehäuseseitige Funkmodul kann die Kraftstoffheizeinrichtung regeln. Der eine oder die mehreren Temperatursensoren können jeweils einen temperaturabhängigen Widerstand aufweisen, beispielsweise einen Heißleiter (NTC-Widerstand) oder einen Kaltleiter (PTC-Widerstand). Für die Erfassung von Kraftstofftemperaturen ist der Erfassungsbereich derartiger Sensoren ausreichend, da lediglich vergleichsweise niedrige Temperaturen unter 80 ° C erfasst werden müssen. Ferner muss nicht permanent, sondern nur beim Motorstart und/oder in regelmäßigen oder unregelmäßigen Zeitintervallen gemessen werden.

Die der Erfindung zugrundeliegende Aufgabe wird ferner durch einen Fluidfilter der eingangs genannten Art gelöst, wobei der Filtereinsatz des erfindungsgemäßen Fluidfilters nach einer der vorstehend beschriebenen Ausführungsformen ausgebildet ist. Hinsichtlich der Vorteile und Modifikationen des erfindungsgemäßen Fluidfilters wird somit zunächst auf die Vorteile und Modifikationen des erfindungsgemäßen Filtereinsatzes verwiesen.

In einer bevorzugten Ausführungsform des erfindungsgemäßen Fluidfilters ist das gehäuseseitige Funkmodul dazu eingerichtet, ein oder mehrere Funksignale von dem schwimmfähigen Funkmodul zu empfangen, mittels welchem der Abstand des schwimmfähigen Funkmoduls zu dem gehäuseseitigen Funkmodul ermittelbar ist. Das gehäuseseitige Funkmodul kann ferner dazu eingerichtet sein, ein oder mehrere Funksignale von einem weiteren filtereinsatzseitigen Funkmodul zu empfangen, mittels welchen der Abstand des weiteren filtereinsatzseitigen Funkmoduls zu dem gehäuseseitigen Funkmodul ermittelbar ist. Über den ermittelten Abstand des schwimmfähigen Funkmoduls zu dem gehäuseseitigen Funkmodul kann dann über einen Zusammenhang zwischen Abstand und Wasserstand bzw. über ein entsprechendes Kennfeld der Wasserstand in dem Wassersammelbereich des Fluidfilters ermittelt werden. Über den ermittelten Abstand des weiteren filtereinsatzseitigen Funkmoduls zu dem gehäuseseitigen Funkmodul kann über einen Zusammenhang zwischen Abstand und Verschmutzungszustand bzw. über ein entsprechendes Kennfeld der Verschmutzungszustand des Filtermaterials des Filtereinsatzes ermittelt werden.

Es ist außerdem ein Fluidfilter bevorzugt, bei welchem das Filtergehäuse einen Gehäusebasiskörper und ein Gehäusedeckel aufweist, wobei das gehäuseseitige Funkmodul in oder an dem Gehäusebasiskörper oder an dem Gehäusedeckel angeordnet ist. Der Gehäusebasiskörper und der Gehäusedeckel sind vorzugsweise zerstörungsfrei lösbar miteinander verbindbar, beispielsweise über korrespondierende Gewindeabschnitte an dem Gehäusebasiskörper und dem Gehäusedeckel. Der Gehäusedeckel kann beispielsweise auf den Gehäusebasiskörper aufschraubbar sein. Der Gehäusedeckel kann beispielsweise eine Becherform aufweisen. In dem Gehäusedeckel kann beispielsweise der Wassersammelbereich angeordnet sein. Das Filtergehäuse des erfindungsgemäßen Fluidfilters kann ferner einen Stützdorn für den Filtereinsatz aufweisen, wobei das filtergehäuseseitige Funkmodul an dem Stützdorn angeordnet ist.

In einer bevorzugten Ausführungsform weist der erfindungsgemäße Fluidfilter ein Wasserablassventil zum Ablassen des Wassers auf, welches sich in einem Wassersammelbereich des Fluidfilters ansammelt, wobei das Wasserablassventil dazu eingerichtet ist, in Abhängigkeit des Abstands zwischen dem schwimmfähigen Funkmodul und dem gehäuseseitigen Funkmodul betätigt zu werden. Der Fluidfilter kann in diesem Fall beispielsweise ein Kraftstofffilter sein. Das Wasserablassventil kann beispielsweise selbsttätig in Abhängigkeit des Wasserfüllstands in dem Wassersammelbereich geöffnet und/oder geschlossen werden. Beispielsweise kann das Wasserablassventil bei Erreichen oder Überschreiten eines Wasserfüllstandsgrenzwerts automatisch geöffnet werden, um das Wasser aus dem Wassersammelbereich bzw. aus dem Fluidfilter abzuführen. Der Wasserfüllstand kann, beispielsweise durch eine Datenverarbeitungseinrichtung eines Filtersystems, über den Abstand zwischen dem schwimmfähigen Funkmodul und dem gehäuseseitigen Funkmodul ermittelt werden. Das Wasserablassventil kann ein Magnetventil sein. Die Steuerung des Wasserablassventils in Abhängigkeit des Abstands zwischen dem schwimmfähigen Funkmodul und dem gehäuseseitigen Funkmodul erfolgt vorzugsweise über eine Steuerungseinrichtung, welche Bestandteil eines Filtersystems ist. Der Filtereinsatz des Fluidfilters kann zusätzlich zu dem schwimmfähigen Funkmodul ein filtereinsatzseitiges Funkmodul aufweisen, welches dazu eingerichtet ist, sich im Betrieb des Fluidfilters in Abhängigkeit des von dem Verschmutzungszustand des Filtermaterials abhängigen Druckunterschieds zwischen Rohseite und Reinseite des Fluidfilters zu bewegen. Ein derartiges filtereinsatzseitiges Funkmodul ist aber nicht zwingend erforderlich. Der Filtereinsatz des Fluidfilters kann auch ohne ein filtereinsatzseitiges Funkmodul zur Verschmutzungszustandserfassung aufzuweisen ein schwimmfähigen Funkmodul zur Steuerung des Wasserablasses umfassen.

Die der Erfindung zugrundeliegende Aufgabe wird ferner durch ein Filtersystem der eingangs genannten Art gelöst, wobei der Fluidfilter des erfindungsgemäßen Filtersystems nach einer der vorstehend beschriebenen Ausführungsformen ausgebildet ist und die Datenverarbeitungseinrichtung dazu eingerichtet ist, ein oder mehrere von dem schwimmfähigen Funkmodul an das gehäuseseitige Funkmodul gesendete Signale und/oder deren Signaleigenschaften zum Ermitteln des Abstands zwischen dem schwimmfähigen Funkmodul und dem gehäuseseitigen Funkmodul auszuwerten. Die Datenverarbeitungseinrichtung ermittelt zur Abstandserfassung vorzugsweise die Signalqualität der von dem gehäuseseitigen Funkmodul empfangenen Funksignale. Das gehäuseseitige Funkmodul oder die Datenverarbeitungseinrichtung kann hierzu eine Verstärkerschaltung zur Signalverstärkung und/oder eine Filterschaltung zur Signalfilterung aufweisen. Hinsichtlich der Vorteile und Modifikationen des erfindungsgemäßen Filtersystems wird zunächst auf die Vorteile und Modifikationen des erfindungsgemäßen Fluidfilters verwiesen.

Die Datenverarbeitungseinrichtung kann ferner dazu eingerichtet sein, ein oder mehrere von einem weiteren filtereinsatzseitigen Funkmodul an das gehäuseseitige Funkmodul gesendete Signale und/oder deren Signaleigenschaften zum Ermitteln des Abstands zwischen dem weiteren filtereinsatzseitigen Funkmodul und dem gehäuseseitigen Funkmodul auszuwerten, um auf Grundlage dieser Auswertung den Verschmutzungszustand des Filtermaterials zu ermitteln.

In einer bevorzugten Ausführungsform des erfindungsgemäßen Filtersystems ist die elektronische Datenverarbeitungseinrichtung dazu eingerichtet, den Abstand zwischen dem schwimmfähigen Funkmodul und dem gehäuseseitigen Funkmodul auf Grundlage der Signalstärke und/oder des Signalrauschens des einen oder der mehreren von dem schwimmfähigen Funkmodul ausgesendeten Funksignale zu ermitteln. Alternativ oder zusätzlich ist die elektronische Datenverarbeitungseinrichtung dazu eingerichtet, den Abstand zwischen dem weiteren filtereinsatzseitigen Funkmodul und dem gehäuseseitigen Funkmodul auf Grundlage der Signalstärke und/oder des Signalrauschens des einen oder der mehreren von dem weiteren filtereinsatzseitigen Funkmodul ausgesendeten Funksignale zu ermitteln. Über die Signalstärke und das Signalrauschen kann über eine entsprechende Signalauswertung der Abstand zwischen dem schwimmfähigen Funkmodul und dem gehäuseseitigen Funkmodul bzw. zwischen dem weiteren filtereinsatzseitigen Funkmodul und dem gehäuseseitigen Funkmodul vergleichsweise präzise berechnet werden. Auf Grundlage dieser Berechnung kann dann der Wasserstand in dem Wassersammelbereich und der Verschmutzungszustand des Filtermaterials ermittelt werden.

In einer weiteren bevorzugten Ausführungsform des erfindungsgemäßen Fluidfilters ist die elektronische Datenverarbeitungseinrichtung dazu eingerichtet, auf Grundlage des Abstands zwischen dem schwimmfähigen Funkmodul und dem gehäuseseitigen Funkmodul den Wasserstand in dem Wassersammelbereich des Fluidfilters zu bestimmen. Zum Bestimmen des Wasserstandes in dem Wassersammelbereich des Fluidfilters kann die elektronische Datenverarbeitungseinrichtung einen, insbesondere filterspezifischen, filtereinsatzspezifischen oder filtermaterialspezifischen Zusammenhang zwischen dem Abstand vom schwimmfähigen und gehäuseseitigen Funkmodul und dem Wasserstand in dem Wassersammelbereich des Fluidfilters verwenden. Der Zusammenhang kann beispielsweise den filterspezifischen Abstand des schwimmfähigen Funkmoduls und des gehäuseseitigen Funkmoduls bei leerem Wassersammelbereich und/oder den filterspezifischen Abstand des schwimmfähigen Funkmoduls und des gehäuseseitigen Funkmoduls bei einem maximalen Füllstand im Wassersammelbereich berücksichtigen. Die elektronische Datenverarbeitung kann ferner dazu eingerichtet sein, auf Grundlage des Abstands zwischen einem weiteren filtereinsatzseitigen Funkmodul und dem gehäuseseitigen Funkmodul den Verschmutzungszustand des Filtermaterials zu bestimmen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Fluidfilters in einer schematischen Schnittdarstellung;
- Fig. 2: den Wassersammelbereich des in der Fig. 1 abgebildeten Fluidfilters in bei geringem Wasserstand;
- Fig. 3: den Wassersammelbereich des in der Fig. 1 abgebildeten Fluidfilters in bei hohem Wasserstand;
- Fig. 4: den in der Fig. 1 abgebildeten Fluidfilter mit einem stark verschmutzen Filtermaterial in einer schematischen Schnittdarstellung;
- Fig. 5: ein schwimmfähiges Funkmodul eines erfindungsgemäßen Filtereinsatzes in einer perspektivischen Darstellung; und
- Fig. 6: ein weiteres Ausführungsbeispiel des erfindungsgemäßen Fluidfilters in einer schematischen Schnittdarstellung.

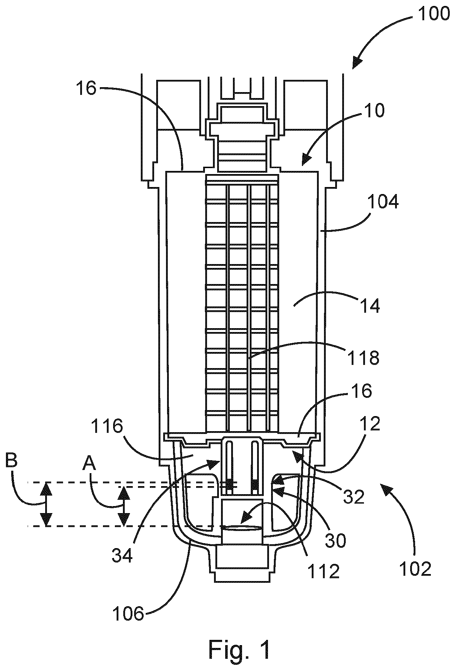

Die Fig. 1 zeigt einen als Kraftstofffilter ausgebildeten Fluidfilter 100. Der Fluidfilter 100 umfasst ein mehrteiliges Filtergehäuse 102, wobei das Filtergehäuse 102 einen Gehäusebasiskörper 104 und einen Gehäusedeckel 106 aufweist.

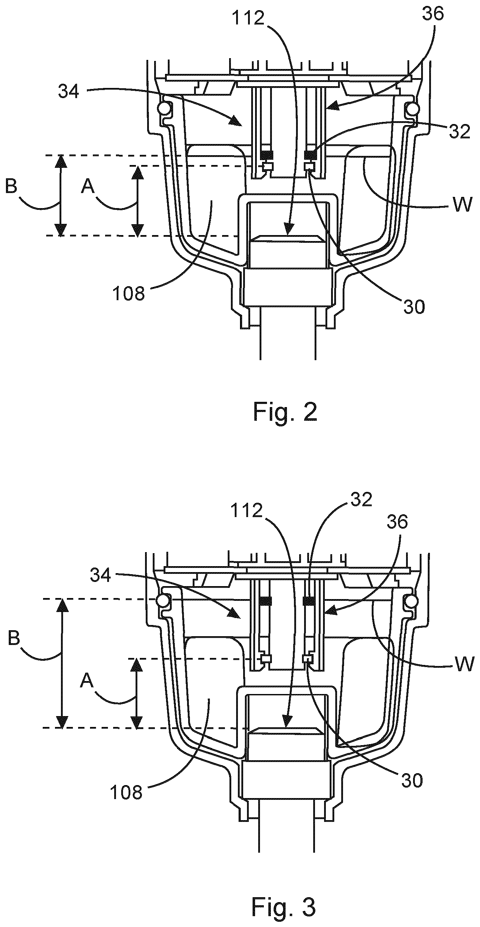

In dem Filtergehäuse 102 befindet sind ein Filtereinsatz 10. Der Filtereinsatz 10 weist als Filtermaterial 14 einen umlaufenden Faltenbalg auf, wobei das Filtermaterial 14 im Betrieb des Fluidfilters 100 von einer Rohseite 116 zu einer Reinseite 118 des Fluidfilters 100 von dem zu filternden Kraftstoff durchströmt wird. Das Filtermaterial 14 scheidet während der Filtration Wasser aus dem Kraftstoff ab. Das abgeschiedene Wasser sammelt sich in dem Wassersammelbereich 108 (vgl. Fig. 2 & 3). Das Filtermaterial 14 wird von einer Trägerstruktur 12 getragen. Die Trägerstruktur 12 umfasst Endscheiben 16, welche stirnseitig des Filtermaterials 14 angeordnet sind.

Der Filtereinsatz 10 umfasst ein schwimmfähiges Funkmodul 32 und ein weiteres filtereinsatzseitiges Funkmodule 30. Die Funkmodule 30, 32 umfassen jeweils einen RFID-Transponder. Das schwimmfähige Funkmodul 32 ist in einer Schwimmkammer 36 angeordnet, welche Bestandteil einer Funkmodulhalterung 34 ist. Das filtereinsatzseitige Funkmodul 30 ist fest an der Funkmodulhalterung 34 des Filtereinsatzes 10 fixiert.

An dem Filtergehäuse 102 ist ein gehäuseseitiges Funkmodul 112 angeordnet. Das gehäuseseitige Funkmodul 112 umfasst ein RFID-Lesegerät. Die filtereinsatzseitigen Funkmodule 30, 32 und das gehäuseseitige Funkmodul 112 sind dazu eingerichtet, miteinander zu kommunizieren. Die Funkmodule 30, 32 sind dazu eingerichtet, die für die Kommunikation mit dem gehäuseseitigen Funkmodul 112 benötigte Energie aus einem von dem gehäuseseitigen Funkmodul 112 erzeugten elektromagnetischen Feld zu beziehen. Somit benötigen die Funkmodule 30, 32 keine eigene Stromversorgung.

Die Fig. 2 zeigt, dass die die Schwimmkammer 36 als Schwimmkäfig ausgebildet ist. Die Schwimmkammer 36 ragt in den Wassersammelbereich 108 des Fluidfilters 100 hinein, in welchem sich im Betrieb des Fluidfilters 100 aus dem zu filternden Fluid abgeschiedenes Wasser ansammelt. Das schwimmfähige Funkmodul 32 schwimmt auf dem sich in dem Wassersammelbereich 108 sammelnden Wasser, wobei der Schwimmkammer 36 einen Auftriebsbereich für das schwimmfähige Funkmodul 32 aufweist, welcher ein Aufsteigen des schwimmfähigen Funkmoduls 32 bei steigendem Wasserstand W in dem Wassersammelbereich 108 des Fluidfilters 100 erlaubt. Das schwimmfähige Funkmodul 32 schwimmt im Betrieb des Fluidfilters 100 in eine Grenzschicht zwischen dem zu filternden Kraftstoff auf der Rohseite des Fluidfilters 100 und der sich in dem Wassersammelbereich 108 des Fluidfilters 100 befindenden Wassermenge.

Wie die Fig. 3 zeigt, nimmt bei steigendem Wasserstand W der Abstand B zwischen dem schwimmfähigen Funkmodul 32 und dem gehäuseseitigen Funkmodul 112 zu. Durch eine Signalauswertung der von dem schwimmfähigen Funkmodul 32 an das gehäuseseitigen Funkmodul 112 übertragenen Funksignale kann eine mit dem gehäuseseitige Funkmodul 112 verbundene elektronische Datenverarbeitungseinrichtung den Abstand B ermitteln. Die elektronische Datenverarbeitungseinrichtung wertet die von dem schwimmfähigen Funkmodul 32 an das gehäuseseitige Funkmodul 112 gesendeten Signale und/oder deren Signaleigenschaften zum Ermitteln des Abstands B zwischen dem schwimmfähigen Funkmodul 32 und dem gehäuseseitigen Funkmodul 112 aus. Auf Grundlage des Abstands B zwischen den schwimmfähigen Funkmodul 32 und dem gehäuseseitigen Funkmodul 112 kann die elektronische Datenverarbeitungseinrichtung dann den Wasserstand W in dem Wassersammelbereich 108 bestimmen. Das Bestimmen des Wasserstandes W erfolgt dabei beispielsweise über einen filterspezifischen, filtereinsatzspezifischen oder filtermaterialspezifischen Zusammenhang zwischen dem Abstand B des schwimmfähigen Funkmoduls 32 zu dem gehäuseseitigen Funkmodul 112 und dem Wasserstand W in dem Wassersammelbereich 108. Der Zusammenhang berücksichtigt den filterspezifischen Abstand B des schwimmfähigen Funkmoduls 32 und des gehäuseseitigen Funkmoduls 112 bei leerem Wassersammelbereich 108 und bei einem maximalen Füllstand im Wassersammelbereich 108.

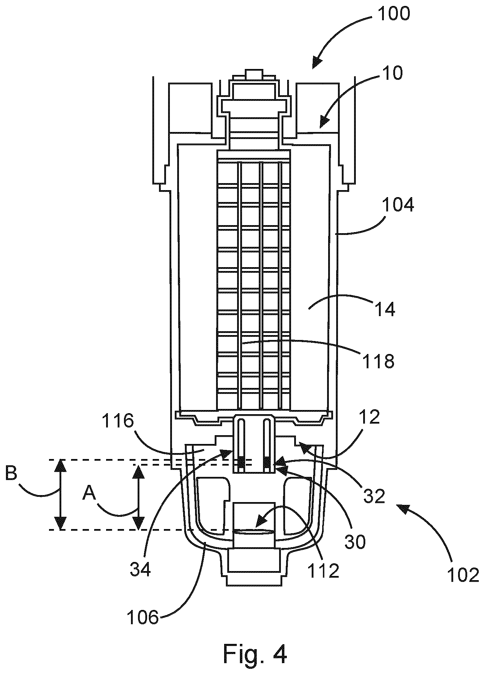

Bei dem in den Fig. 1 bis 4 dargestellten Ausführungsbeispiel des Fluidfilters 100 bewegt sich der gesamte Filtereinsatz 10 in Axialrichtung bei einer Differenzdruckerhöhung zwischen der Rohseite 116 und der Reinseite 118 des Fluidfilters 100. Die Differenzdruckerhöhung zwischen der Rohseite 116 und der Reinseite 118 des Fluidfilters 100 resultiert aus einer zunehmenden Verschmutzung des Filtermaterials 14. Bei dem in der Fig. 1 dargestellten Zustand ist das Filtermaterial 14 des Filtereinsatzes 10 unverschmutzt, sodass ein vergleichsweise geringer Differenzdruck zwischen der Rohseite 116 und der Reinseite 118 des Fluidfilters 100 vorliegt. Der Differenzdruck ist derart gering, dass der Filtereinsatz 10 auf einer innenliegenden Kante des Gehäusedeckels 106 aufliegt. Die Fig. 4 zeigt einen Zustand, in welchem das Filtermaterial 14 des Filtereinsatzes 10 stark verschmutzt ist, sodass zwischen der Rohseite 116 und der Reinseite 118 des Fluidfilters 100 ein vergleichsweise hoher Differenzdruck vorliegt. Der hohe Differenzdruck zwischen der Rohseite 116 und der Reinseite 118 des Fluidfilters 100 hat zu einer Axialauslenkung des Filtereinsatzes 10 geführt, wodurch auch der Abstand A zwischen dem filtereinsatzseitigen Funkmodul 30 und dem gehäuseseitigen Funkmodul 112 vergrößert wurde.

Durch eine Signalauswertung der Funksignale, welche von dem filtereinsatzseitigen Funkmodul 30 an das gehäuseseitige Funkmodul 112 übermittelt werden, kann der Abstand A zwischen den Funkmodulen 30, 112 und somit der Verschmutzungszustand des Filtermaterials 14 ermittelt werden. Die Signalauswertung wird durch die elektronische Datenverarbeitungseinrichtung vorgenommen.

Das Funkmodul 30 und das Funkmodul 32 sind Funkmodule unterschiedlichen Typs, welche unterschiedliche Modulationsarten verwenden, sodass deren Funksignale unterscheidbar sind. Ferner können die Funksignale der Funkmodule 30, 32 anhand einer gesendeten Kennung zugeordnet werden.

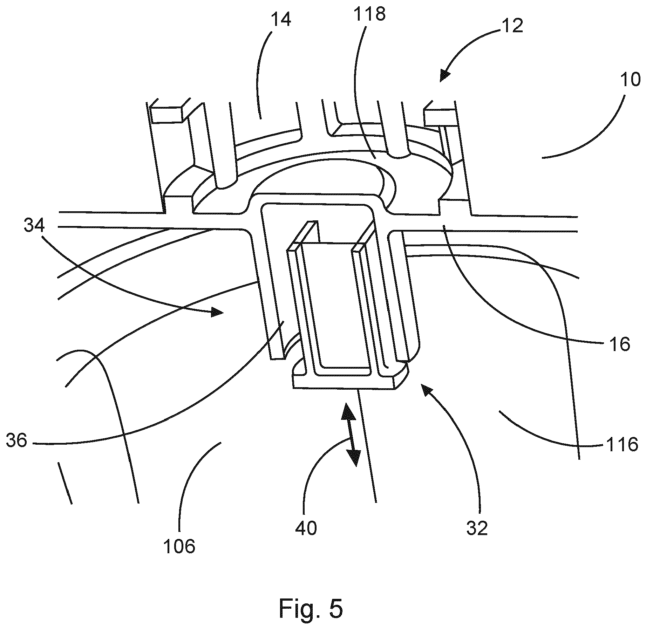

Die Fig. 5 zeigt ebenfalls einen Filtereinsatz 10 eines Kraftstofffilters 100. Das Filtermaterial 14 wird im Betrieb von einer Rohseite 116 zu einer Reinseite 118 des Fluidfilters 100 von dem zu filternden Fluid durchströmt, wobei während der Filtration Wasser aus dem Fluid abgeschieden wird. Das aus dem Fluid abgeschiedene Wasser sammelt sich in dem Wassersammelbereich 108 des Fluidfilters 100.

An der Endscheibe 16 des Filtereinsatzes 10 ist eine Funkmodulhalterung 34 angeordnet, welche eine in den Wassersammelbereich 108 hineinragende Schwimmkammer 36 aufweist. In der Schwimmkammer 36 ist ein schwimmfähiges Funkmodul 32 angeordnet, welches im Betrieb des Fluidfilters auf der sich in dem Wassersammelbereich 108 des Fluidfilters 100 befindenden Wassermenge schwimmt. Die Schwimmkammer 36 weist einen Auftriebsbereich für das schwimmfähige Funkmodul 32 auf, welches ein Aufsteigen des schwimmfähigen Funkmoduls 32 bei steigendem Wasserstand W in dem Wassersammelbereich 108 des Fluidfilters 100 erlaubt. Durch den Auftriebsbereich kann das schwimmfähige Funkmodul 32 eine Axialbewegung 40 ausführen, wobei die von dem schwimmfähigen Funkmodul 32 ausgeführte Axialbewegung 40 vom Wasserstand W in dem Wassersammelbereich 108 des Fluidfilters 100 abhängig ist. Das Funkmodul 32 weist ein aus Kunststoff ausgebildetes Modulgehäuse auf, in welches ein RFID-Tag integriert ist.

Das schwimmfähige Funkmodul 32 kommuniziert mit einem gehäuseseitigen Funkmodul 112 (außerhalb des Bildausschnitts). Das gehäuseseitige Funkmodul 112 ist dazu eingerichtet, Funksignale von dem schwimmfähigen Funkmodul 32 zu empfangen, mittels welchen der Abstand B des schwimmfähigen Funkmoduls 32 zu dem gehäuseseitigen Funkmodul 112 ermittelbar ist. Zum Ermitteln des Abstands B des schwimmfähigen Funkmoduls 32 zu dem gehäuseseitigen Funkmodul 112 werden die von dem schwimmfähigen Funkmodul 32 an das gehäuseseitige Funkmodul 112 gesendeten Funksignale und/oder deren Signaleigenschaften durch eine elektronische Datenverarbeitungseinrichtung ausgewertet. Die elektronische Datenverarbeitungseinrichtung ermittelt den Abstand B zwischen dem schwimmfähigen Funkmodul 32 und dem gehäuseseitigen Funkmodul 112 auf Grundlage der Signalstärke und/oder des Signalrauschens der von dem schwimmfähigen Funkmodul 32 an das gehäuseseitige Funkmodul 112 gesendeten Funksignale. Die elektronische Datenverarbeitungseinrichtung ist dazu eingerichtet, auf Grundlage des Abstands B zwischen dem schwimmfähigen Funkmodul 32 und dem gehäuseseitigen Funkmodul 112 den Wasserstand W in dem Wassersammelbereich 108 des Fluidfilters 100 zu bestimmen. Hierfür kann die Datenverarbeitungseinrichtung beispielsweise einen filterspezifischen, filtereinsatzspezifischen oder filtermaterialspezifischen Zusammenhang zwischen dem Abstand B des schwimmfähigen Funkmoduls 32 zu dem gehäuseseitigen Funkmodul 112 und dem Wasserstand W in dem Wassersammelbereich 108 des Fluidfilters 100 verwenden.

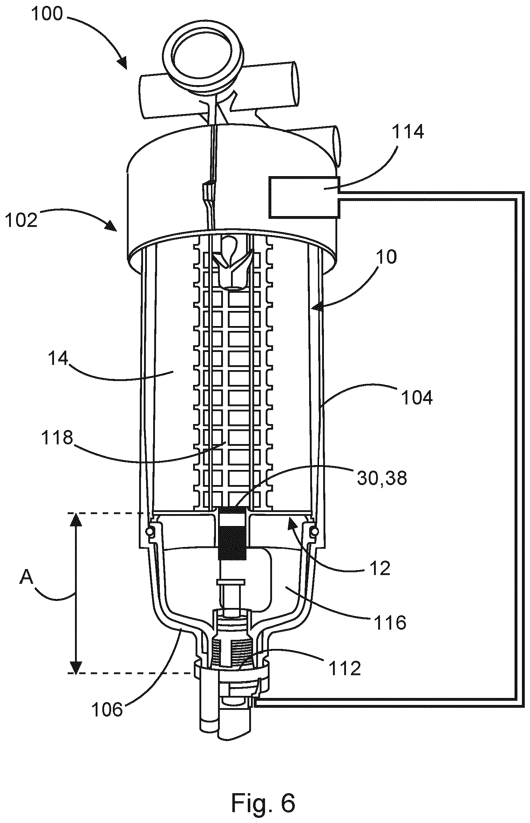

Die Fig. 6 zeigt einen als Kraftstofffilter ausgebildeten Fluidfilter 100, bei welchem das filtereinsatzseitige Funkmodul 30 eine Temperaturmesseinrichtung 38 aufweist und dazu eingerichtet ist, Temperaturmesswerte an das gehäuseseitige Funkmodul 112 zu übermitteln. Das filtereinsatzseitige Funkmodul 30 kann einen zusätzlichen Mikrocontroller und einen oder mehrere Temperatursensoren umfassen, welche die Temperaturmesseinrichtung 38 bilden. Die übermittelten Temperaturmesswerte können zum Steuern oder Regeln einer Heizeinrichtung 114 verwendet werden, wobei die Heizeinrichtung 114 zum Erwärmen des Kraftstoffs innerhalb des Filtergehäuses 102 eingesetzt wird. Bei einer zu niedrigen Kraftstofftemperatur kann die Heizeinrichtung 114 eingeschaltet werden. Der eine oder die mehreren Temperatursensoren der Temperaturmesseinrichtung 38 können Thermistoren, beispielsweise Heißleiter, sein. Über eine Datenverarbeitungseinrichtung kann bei dem in der Fig. 6 dargestellten Ausführungsbeispiel außerdem der Abstand A zwischen dem filtereinsatzseitigen Funkmodul 30 und dem gehäuseseitigen Funkmodul 112 und somit der Verschmutzungszustand des Filtermaterials 14 ermittelt werden.

## Patentansprüche

1. Filtereinsatz (10) zum Einsetzen in ein Filtergehäuse (102) eines Fluidfilters (100), mit
- einem Filtermaterial (14), welches dazu eingerichtet ist, im Betrieb des Fluidfilters (100) von einer Rohseite (116) zu einer Reinseite (118) des Fluidfilters (100) von einem zu filternden Fluid durchströmt zu werden;
**gekennzeichnet durch** ein schwimmfähiges Funkmodul (32), welches dazu eingerichtet ist, im Betrieb des Fluidfilters (100) auf einer sich in einem Wassersammelbereich (108) des Fluidfilters (100) befindenden Wassermenge zu schwimmen.

2. Filtereinsatz (10) nach Anspruch 1,
**dadurch gekennzeichnet, dass** das schwimmfähige Funkmodul (32) dazu eingerichtet ist, im Betrieb des Fluidfilters (100) in einer Grenzschicht zwischen dem zu filternden Fluid auf der Rohseite (116) des Fluidfilters (100) und der sich in dem Wassersammelbereich (108) des Fluidfilters (100) befindenden Wassermenge zu schwimmen.

3. Filtereinsatz (10) nach Anspruch 1 oder 2,
**dadurch gekennzeichnet, dass** das schwimmfähige Funkmodul (32) dazu eingerichtet ist, zur Erfassung des Wasserstandes (W) in dem Wassersammelbereich (108) des Fluidfilters (100) mit einem gehäuseseitigen Funkmodul (112) des Fluidfilters (100) zu kommunizieren, dessen Abstand (B) zum schwimmfähigen Funkmodul (32) sich bei einer Veränderung des Wasserstandes (W) in dem Wassersammelbereich (108) des Fluidfilters (100) ändert.

4. Filtereinsatz (10) nach Anspruch 3,
**dadurch gekennzeichnet, dass** das schwimmfähige Funkmodul (32) dazu eingerichtet ist, ein oder mehrere Funksignale auszusenden, mittels welchen der Abstand (B) des schwimmfähigen Funkmoduls (32) zu dem gehäuseseitigen Funkmodul (112) ermittelbar ist und/oder welche eine Identifikation des Filtereinsatzes (10) oder eine Typenerkennung des Filtereinsatzes (10) erlauben.

5. Filtereinsatz (10) nach einem der vorstehenden Ansprüche,
**gekennzeichnet durch** eine Schwimmkammer (36), in welcher das schwimmfähige Funkmodul (32) angeordnet ist, wobei die Schwimmkammer (36) dazu eingerichtet ist, im Betrieb des Fluidfilters (100) in den Wassersammelbereich (108) des Fluidfilters (100) hineinzuragen.

6. Filtereinsatz (10) nach Anspruch 5,
**dadurch gekennzeichnet, dass** die Schwimmkammer (36) einen Auftriebsbereich für das schwimmfähige Funkmodul (32) aufweist, welches ein Aufsteigen des schwimmfähigen Funkmoduls (32) bei steigendem Wasserstand (W) in dem Wassersammelbereich (108) des Fluidfilters (100) erlaubt.

7. Filtereinsatz (10) nach einem der Ansprüche 3 bis 6,
**dadurch gekennzeichnet, dass** das schwimmfähige Funkmodul (32) dazu eingerichtet ist, die für die Kommunikation mit dem gehäuseseitigen Funkmodul (112) benötigte Energie aus einem vom dem gehäuseseitigen Funkmodul (112) erzeugten elektromagnetischen Feld zu beziehen.

8. Filtereinsatz (10) nach einem der vorstehenden Ansprüche,
**dadurch gekennzeichnet, dass** das schwimmfähige Funkmodul (32) einen Transponder, insbesondere einen RFID-Transponder, umfasst oder als Transponder, insbesondere als RFID-Transponder, ausgebildet ist.

9. Fluidfilter (100) zum Filtern eines Fluids, mit
- einem Filtergehäuse (102) mit einem gehäuseseitigen Funkmodul (112), und
- einem Filtereinsatz (10) mit einem schwimmfähigen Funkmodul (32), wobei der Filtereinsatz (10) dazu eingerichtet ist, in das Filtergehäuse (102) eingesetzt zu werden;
wobei das schwimmfähige Funkmodul (32) und das gehäuseseitige Funkmodul (112) dazu eingerichtet sind, miteinander zu kommunizieren; **dadurch gekennzeichnet, dass** der Filtereinsatz (10) nach einem der vorstehenden Ansprüche ausgebildet ist.

10. Fluidfilter (100) nach Anspruch 9,
**dadurch gekennzeichnet, dass** das gehäuseseitige Funkmodul (112) dazu eingerichtet ist, ein oder mehrere Funksignale von dem schwimmfähigen Funkmodul (32) zu empfangen, mittels welchen der Abstand (B) des schwimmfähigen Funkmoduls (32) zu dem gehäuseseitigen Funkmodul (112) ermittelbar ist.

11. Fluidfilter (100) nach Anspruch 10,
**dadurch gekennzeichnet, dass**
- das Filtergehäuse (102) einen Gehäusebasiskörper (104) und einen Gehäusedeckel (106) aufweist, wobei das gehäuseseitige Funkmodul (112) in dem Gehäusebasiskörper (104) oder dem Gehäusedeckel (106) angeordnet ist; oder
- das Filtergehäuse (102) einen Stützdorn für den Filtereinsatz (10) aufweist, wobei das gehäuseseitige Funkmodul (112) an dem Stützdorn angeordnet ist.

12. Fluidfilter (100) nach einem der Ansprüche 9 bis 11,
**gekennzeichnet durch** ein Wasserablassventil zum Ablassen des Wassers, welches sich in einem Wassersammelbereich (108) des Fluidfilters (100) ansammelt, wobei das Wasserablassventil dazu eingerichtet ist, in Abhängigkeit des Abstands (B) zwischen dem schwimmfähigen Funkmodul (32) und dem gehäuseseitigen Funkmodul (112) betätigt zu werden.

13. Filtersystem, mit
- einem Fluidfilter, und
- einer elektronischen Datenverarbeitungseinrichtung,
**dadurch gekennzeichnet, dass** der Fluidfilter (100) nach einem der Ansprüche 9 bis 12 ausgebildet ist und die Datenverarbeitungseinrichtung dazu eingerichtet ist, ein oder mehrere von dem schwimmfähigen Funkmodul (32) an das gehäuseseitige Funkmodul (112) gesendete Signale und/oder deren Signaleigenschaften zum Ermitteln des Abstands (B) zwischen dem schwimmfähigen Funkmodul (32) und dem gehäuseseitigen Funkmodul (112) auszuwerten.

14. Filtersystem nach Anspruch 13,
**dadurch gekennzeichnet, dass** die elektronische Datenverarbeitungseinrichtung dazu eingerichtet ist, den Abstand (B) zwischen dem schwimmfähigen Funkmodul (32) und dem gehäuseseitigen Funkmodul (112) auf Grundlage der Signalstärke und/oder des Signalrauschens des einen oder der mehreren Signale zu ermitteln.

15. Filtersystem nach Anspruch 13 oder 14,
**dadurch gekennzeichnet, dass** die elektronische Datenverarbeitungseinrichtung dazu eingerichtet ist, auf Grundlage des Abstands (B) zwischen dem schwimmfähigen Funkmodul (32) und dem gehäuseseitigen Funkmodul (112) den Wasserstand (W) in dem Wassersammelbereich (108) des Fluidfilters (100) zu bestimmen.

## Claims

1. Filter insert (10) for insertion into a filter housing (102) of a fluid filter (100), with
- a filter material (14) which, is set up to be flowed through by a fluid to be filtered from a raw side (116) to a clean side (118) of the fluid filter (100) during operation of the fluid filter (100);
**characterized by** a floatable radio module (32) which is set up to float on a quantity of water located in a water collection area (108) of the fluid filter (100) during operation of the fluid filter (100).

2. Filter insert (10) according to claim 1,
**characterized in that** the floatable radio module (32) is set up to float in a boundary layer between the fluid to be filtered on the raw side (116) of the fluid filter (100) and the amount of water located in the water collection area (108) of the fluid filter (100) during operation of the fluid filter (100).

3. Filter insert (10) according to claim 1 or 2,
**characterized in that** the floatable radio module (32) is set up to, for detecting the water level (W) in the water collection area (108) of the fluid filter (100), communicate with a housing-side radio module (112) of the fluid filter (100), whose distance (B) to the floatable radio module (32) changes when the water level (W) in the water collection area (108) of the fluid filter (100) changes.

4. Filter insert (10) according to claim 3,
**characterized in that** the floatable radio module (32) is set up to transmit one or more radio signals by means of which the distance (B) of the floatable radio module (32) to the housing-side radio module (112) can be determined and/or which allow an identification of the filter insert (10) or a type identification of the filter insert (10).

5. Filter insert (10) according to one of the preceding claims,
**characterized by** a float chamber (36) in which the floatable radio module (32) is arranged, wherein the float chamber (36) is set up to project into the water collection area (108) of the fluid filter (100) during operation of the fluid filter (100).

6. Filter insert (10) according to claim 5,
**characterized in that** the float chamber (36) has a buoyancy area for the floatable radio module (32), which allows the floatable radio module (32) to rise when the water level (W) in the water collection area (108) of the fluid filter (100) rises.

7. Filter insert (10) according to any one of claims 3 to 6,
**characterized in that** the floatable radio module (32) is set up to obtain the energy required for the communication with the housing-side radio module (112) from an electromagnetic field generated by the housing-side radio module (112).

8. Filter insert (10) according to one of the preceding claims,
**characterized in that** the floatable radio module (32) comprises a transponder, in particular an RFID transponder, or is designed as a transponder, in particular as an RFID transponder.

9. Fluid filter (100) for filtering a fluid, with
- a filter housing (102) with a housing-side radio module (112), and
- a filter insert (10) with a floatable radio module (32), wherein the filter insert (10) is set up to be inserted into the filter housing (102);
wherein the floatable radio module (32) and the housing-side radio module (112) are set up to communicate with each other;
**characterized in that** the filter insert (10) is designed according to one of the preceding claims.

10. Fluid filter (100) according to claim 9,
**characterized in that** the housing-side radio module (112) is set up to receive one or more radio signals from the floatable radio module (32), by means of which the distance (B) between the floatable radio module (32) and the housing-side radio module (112) can be determined.

11. Fluid filter (100) according to claim 10,
**characterized in that**
- the filter housing (102) has a housing base body (104) and a housing cover (106), wherein the housing-side radio module (112) is arranged in the housing base body (104) or the housing cover (106); or
- the filter housing (102) has a support mandrel for the filter insert (10), wherein the housing-side radio module (112) is arranged on the support mandrel.

12. Fluid filter (100) according to any one of claims 9 to 11,
**characterized by** a water drain valve for draining the water accumulated in a water collection area (108) of the fluid filter (100), wherein the water drain valve is set up to be actuated depending on the distance (B) between the floatable radio module (32) and the housing-side radio module (112).

13. Filter system, with
- a fluid filter, and
- an electronic data processing device,
**characterized in that** the fluid filter (100) is designed according to one of claims 9 to 12 and the data processing device is set up to evaluate one or more signals sent by the floatable radio module (32) to the housing-side radio module (112) and/or their signal properties for determining the distance (B) between the floatable radio module (32) and the housing-side radio module (112).

14. Filter system according to claim 13,
**characterized in that** the electronic data processing device is set up to determine the distance (B) between the floatable radio module (32) and the housing-side radio module (112) on the basis of the signal strength and/or the signal noise of the one or more signals.

15. Filter system according to claim 13 or 14,
**characterized in that** the electronic data processing device is set up to determine the water level (W) in the water collection area (108) of the fluid filter (100) on the basis of the distance (B) between the floatable radio module (32) and the housing-side radio module (112).

## Revendications

1. Cartouche de filtrage (10) à insérer dans un carter de filtre (102) d'un filtre à fluide (100), dotée de
- un matériau filtrant (14) qui est conçu pour être traversé par un fluide à filtrer pendant le fonctionnement du filtre à fluide (100), d'un côté brut (116) vers un côté propre (118) du filtre à fluide (100) ;
**caractérisée par** un module radio flottant (32) qui est conçu pour flotter sur une quantité d'eau se trouvant dans une zone de collecte d'eau (108) du filtre à fluide (100) pendant le fonctionnement du filtre à fluide (100).

2. Cartouche de filtrage (10) selon la revendication 1,
**caractérisée en ce que** le module radio flottant (32) est conçu pour flotter, pendant le fonctionnement du filtre à fluide (100), dans une couche frontière entre le fluide à filtrer sur le côté brut (116) du filtre à fluide (100), et la quantité d'eau se trouvant dans la zone de collecte d'eau (108) du filtre à fluide (100).

3. Cartouche de filtrage (10) selon la revendication 1 ou 2,
**caractérisée en ce que** le module radio flottant (32) est conçu pour communiquer, afin de déterminer le niveau d'eau (W) dans la zone de collecte d'eau (108) du filtre à fluide (100), avec un module radio côté du carter (112) du filtre à fluide (100), dont la distance (B) par rapport au module radio flottant (32) varie lorsque le niveau d'eau (W) varie dans la zone de collecte d'eau (108) du filtre à fluide (100)

4. Cartouche de filtrage (10) selon la revendication 3,
**caractérisée en ce que** le module radio flottant (32) est conçu pour émettre un ou plusieurs signaux radio au moyen desquels la distance (B) du module radio flottant (32) par rapport au module radio (112) du côté du carter peut être déterminée, et/ou qui permettent d'identifier la cartouche de filtrage (10) ou de reconnaître le type de la cartouche de filtrage (10).

5. Cartouche de filtrage (10) selon l'une quelconque des revendications précédentes,
**caractérisée par** une cellule de flottaison (36) dans laquelle est agencé le module radio flottant (32), ladite cellule de flottaison (36) étant conçue pour pénétrer dans la zone de collecte d'eau (108) du filtre à fluide (100) pendant le fonctionnement du filtre à fluide (100).

6. Cartouche de filtrage (10) selon la revendication 5,
**caractérisée en ce que** la cellule de flottaison (36) présente une zone de flottaison pour le module radio flottant (32), lequel permet au module radio flottant (32) de remonter lorsque le niveau d'eau (W) monte dans la zone de collecte d'eau (108) du filtre à fluide (100).

7. Cartouche de filtrage (10) selon l'une quelconque des revendications 3 à 6, **caractérisée en ce que** le module radio flottant (32) est conçu pour obtenir l'énergie nécessaire à la communication avec le module radio côté carter (112) à partir d'un champ électromagnétique généré par le module radio côté carter (112).

8. Cartouche de filtrage (10) selon l'une quelconque des revendications précédentes,
**caractérisée en ce que** le module radio flottant (32) comprend un transpondeur, notamment un transpondeur RFID, ou est réalisé sous forme de transpondeur, notamment de transpondeur RFID.

9. Filtre à fluide (100) pour filtrer un fluide, doté de
- un carter de filtre (102) doté d'un module radio côté carter (112), et de
- une cartouche de filtrage (10) dotée d'un module radio flottant (32), la cartouche de filtrage (10) étant conçue pour être insérée dans le carter de filtre (102) ;
le module radio flottant (32) et le module radio côté carter (112) étant conçus pour communiquer l'un avec l'autre ;
**caractérisé en ce que** la cartouche de filtrage (10) est réalisée selon l'une quelconque des revendications précédentes

10. Filtre à fluide (100) selon la revendication 9,
**caractérisé en ce que** le module radio côté carter (112) est conçu pour recevoir un ou plusieurs signaux radio du module radio flottant (32) permettant de déterminer la distance (B) entre le module radio flottant (32) et le module radio côté carter (112).

11. Filtre à fluide (100) selon la revendication 10,
**caractérisé en ce que**
- le carter de filtre (102) présente un corps de base de carter (104) et un couvercle de carter (106), le module radio côté carter (112) étant agencé dans le corps de base de carter (104) ou dans le couvercle de carter (106) ; ou
- que le carter de filtre (102) présente un mandrin de support pour la cartouche de filtrage (10), le module radio côté carter (112) étant agencé sur ledit mandrin de support.

12. Filtre à fluide (100) selon l'une quelconque des revendications 9 à 11,
**caractérisé par** une vanne de purge d'eau pour purger l'eau s'accumule dans une zone de collecte d'eau (108) du filtre à fluide (100), ladite vanne de purge d'eau étant conçue pour être actionnée en fonction de la distance (B) entre le module radio flottant (32) et le module radio côté carter (112).

13. Système à filtre, doté de
- un filtre à fluide, et
- d'un dispositif électronique de traitement des données,
**caractérisé en ce que** le filtre à fluide (100) est réalisé selon l'une quelconque des revendications 9 à 12, et le dispositif de traitement des données est conçu pour analyser un ou plusieurs signaux envoyés par le module radio flottant (32) au module radio côté carter (112) et/ou leurs caractéristiques de signaux pour calculer la distance (B) entre le module radio flottant (32) et le module radio côté carter (112).

14. Système de filtre selon la revendication 13,
**caractérisé en ce que** le dispositif électronique de traitement des données est conçu pour calculer la distance (B) entre le module radio flottant (32) et le module radio côté carter (112) sur la base de la puissance du signal et/ou du bruit de signal d'un ou de plusieurs signaux.

15. Système de filtre selon la revendication 13 ou 14,
**caractérisé en ce que** le dispositif électronique de traitement des données est conçu pour déterminer le niveau de l'eau (W) dans la zone de collecte de l'eau (108) du filtre à eau (100) sur la base de la distance (B) entre le module radio flottant (32) et le module radio côté carter (112).
